# EUROPEAN PATENT APPLICATION

(11) **EP 2 570 529 A1**
(43) Date of publication of application: **20.03.2013**
(21) Application number: 12184042.5
(22) Date of filing: 12.09.2012
(51) Int. Cl.: D03D 15/08, D03D 15/00, D03D 1/00, F16G 1/28

(54) **Woven fabric made of texturised yarn**

(30) Priority: 16.09.2011 GB 201116036
(71) Applicant: Heathcoat Fabrics Limited, Devon EX16 5LL (GB)
(72) Inventor: Fry, Elizabeth, Tiverton, Devon EX16 5LB (GB); Roocroft, Brian Thomas, Tiverton, Devon EX16 4JL (GB)
(74) Representative: Perkins, Sarah

(57) **Abstract**

A fabric is disclosed comprising woven, thermoplastic polymer, texturised yarn, having a warp extension of 5-60% and a weft extension of 40-250%. The fabric is useful as the fabric on the working surface of ribbed belts e.g. transmission belts. Also disclosed are ribbed belts comprising the fabric and methods of producing the fabric.

## Description

The present invention relates to fabrics and to methods of making such fabrics. In particular it relates to fabrics for use on the working surface of ribbed belts.

Transmission belts which have ribs or "teeth" in the longitudinal direction (often known as multivee, microvee, polyvee, or ribbed belts) are widely used in automotive and industrial applications for the non-synchronous transmission of power. Such belts are used, for example, in the accessory drives systems of car engines transmitting power to features such as alternators, air conditioning pumps, power steering and for other uses.

Current designs often have elastomer or rubber on the working surface occasionally with flock on the outer later. Such belts often suffer from limited life and other problems including poor durability (especially after the many cycles of use required in application) and may be prone to cracking in the ribbed and/or flat surfaces of the belts during use. Other problems include noise (squealing or squeaking during use, particularly at start-up) and undesirable high frictional and poor abrasion resistance properties.

In order to increase durability and reduce noise in belts, fabrics have been employed adhered to the body of the belt on the working (i.e. ribbed) surface.

Unfortunately, known fabrics suffer from problems which may include poor durability and high permeability which allows the elastomer of the body of the belt to seep through the fabric of the belt before the elastomer is cured. Such seepage means that elastomer is present on the working surface of the belt contributing to durability and noise problems. Known fabrics also suffer from poor stretch.

It is an aim of the present invention to address these issues and to provide a fabric which can be used on the working surface of e.g. ribbed belts.

The present invention accordingly provides a fabric comprising woven, thermoplastic polymer, texturised yarn and having a warp extension at 2kg force 25mm width sample of 5-60% and a weft extension at 2kg force 25mm width sample of 40-250%.

Preferably the warp extension at 2kg force, 25mm width sample is in the range 5-50%, more preferably 10 to 40%, most preferably 10 to 30%.

Preferably, the weft extension at 2kg force 25mm width sample is 50-200%, more preferably 50-150%, most preferably 70-150%.

The invention provides for an advantageous woven fabric with high bulk texturised warp and weft yarns, preferably with low modulus, with high extension/stretch and low permeability.

Surprisingly, the applicants have discovered that using texturised thermoplastic polymer yarn to produce a woven fabric significantly reduces the problems of elastomer seepage through the fabric during manufacture of belts with a consequent improvement in both durability and a reduction in noise.

Knitted fabrics have been used for this purpose in the past but have severe limitations in terms of resistance to elastomer seepage, durability and dimensional stability.

The advantageous warp and weft extensions of the fabric provide significant advantages in particular regarding cover properties. The weft extension characteristics of the fabric when used on the working surface of e.g. a ribbed belt are important because they provide good cover of the ribs, reducing or preventing elastomer seepage and presenting a surface which has optimal noise and friction characteristics, to the pulley surfaces and furthermore to allow formation of the ribs during belt manufacture. The warp extension characteristics of the fabric are important to prevent flex fatigue failure of the fabric itself and the elastomer in the body of the belt associated with repeated bending around various pullies in the drive system during use.

Preferably, the fabric does not comprise elastane.

Elastane (comprising polyurethane) containing fabrics have been used previously to achieve necessary stretch levels in fabrics for belts but the Applicant has found that the elastane component is undesirable in the fabric itself due to its poor thermal stability (resulting in degradation in use) and lack of desirable functionalities such as abrasion resistance. The fabric of the invention is advantageous because if elastane is absent then functional fibres may be included in the fabric belt and those fibres may be aligned only in the working directions.

Preferably the thermoplastic polymer is selected from a polyamide, a polyester, and poly (phenylene sulphide) (PPS) or a mixture of two or more of these polymers.

These thermoplastic polymers have proved to be the most useful to provide durability and address noise problems and are particularly bulky after texturisation which contributes to the surprising advantages of the invention.

The preferred polymers are polyamides and the preferred polyamides are nylon 6.6 or nylon 6.

It is preferred if the tenacity of the yarn is in the range 30-80cN/Tex.

Generally, it is preferred if the yarn is woven according to a weaving pattern selected from a twill, a pique, a panama and/or a hopsack or similar, which is advantageous because it provides a dense fabric with low permeability. The most preferred weaving patterns are twill or pique.

Preferably, the yarn is false twist texturised yarn, in particular yarn which has been false twist texturised preferably using FT pin technology. False twist levels are preferably between 1500 and 3500 turns per metre (tpm).

Preferably, the weft extension at 2kg force of the fabric in the belt (before incorporation in the belt) is 60-150%, preferably 75-150%, more preferably 75-140%. Weft and warp extension is determined using a sample size of 10cm length x25mm width tested on an Instron tensile tester (or similar) with a 1kN capacity load cell using a cross head speed of 500mm/min.

Preferably, the fabric will have a density in the range 50-600g/m², preferably 150-250g/m². Generally, the fabric will have a thickness in the range of 0.2-2.0mm, preferably 0.5-1.2mm.

The air permeability of the fabric is preferably in the range of approximately 50 to 300ft³/ft²/min as determined by Frazier instruments method (corresponding to 15 to 100m³m²/min in Si units).

Surprisingly, it is advantageous (especially as regards permeability) if the fabrics have 50 to 150 ends per 25mm and/or 30-100 picks per 25mm.

In a second aspect, there is provided a ribbed belt having fabric according to the first aspect of the invention on (preferably adhered to) its working surface.

In a third aspect, there is provided a method of producing a fabric, the method comprising providing texturised yarn of a thermoplastic polymer, weaving the yarn to form a fabric having a warp extension at 2kg force 25mm width of 5-50% and a width extension at 2kg force 25mm width of 40-200%.

Preferably, texturising the yarn comprises false twist texturising the yarn using a temperature of 110-270°C, preferably 180 to 260°C, more preferably 200 to 260°C.

The invention is illustrated by the following Examples in which the properties and production of fabrics especially for use in ribbed belts are described.

### Thermoplastic Yarn Material

The most preferred material of the yarn is a polyamide, Nylon 6.6. Other useful yarn materials include Nylon 6, poly(ethylene terephthalate, PET), poly(p-phenylene sulphide, PPS) or any other thermoplastic fibre. The tenacity of the yarn is preferably in the range 30-80cN/Tex.

The linear density of the yarn will typically be in the range 40 dtex to 500 dtex.

### Method of Production

Fabric for use on the working surface of the belt is false twist texturised preferably using FT pin technology. This process imparts a high degree of bulk in the yarn and in the finished article which imparts desired stretch and cover properties. The temperature employed in the FT texturising process will be appropriate to the fibre type but in the case of Nylon 6.6. will be in the range 190-260°C, preferably 230-250°C for Nylon 6.6.

The fabric is woven using weave constructions as required by the particular belt construction to give relatively heavy fabric. These patterns can include pique, twills, panamas, hopsacks, dobby and jacquard designs etc.

After weaving, the fabric may be washed/finished using techniques and equipment including pressure dyeing machines, open width washing ranges and tensionless drying (for example tumble drying) techniques to remove residual fibre spinning aids and to develop and retain sufficient levels of warp and weft extensibility to enhance belt performance.

### Characteristics of Fabric

The fabric has the following characteristics:
i. Density 50-600g/m² Typically 150-250g/m²
ii. Thickness 0.2-2.0mm Typically 0.5-1.2mm
iii. Extension Length (warp) direction 5-50% @ 2.0kg/25mm
iv. Extension Width (warp) direction 40-200% @ 2.0kg/25mm Typically 60-120%
v. Air Permeability (Frazier) 50 - 300 cuft/sqft/min (15 to 91 m³/m²/min)
vi. Ends/25mm 50-150
vii. Picks/25mm 30-100
viii. Extension at break warp 20-80%
ix. Extension at break weft 60-250%

Details of a control fabric (Comparative Example) and Examples of the fabric 1, 2 and 3 are described in Table 1, below.

**Table 1**

| | Example 1 | Example 2 | Example 3 | Comparative Example |
|---|---|---|---|---|
| Texturising Temp (°C) | 230 | 250 | 230 | 180 |
| Density (gm/m²) | 160 | 180 | 210 | 80 |
| Weft ext @ 2Kg (%) | 83 | 128 | 139 | 268 |
| Warp ext @2kg (%) | 18 | 13 | 23 | 3 |
| Air permeability (ft³/ft²/min) | 190 | 106 | 154 | 817 |
| Ends (per 25mm) | 89 | 91 | 113 | 77 |
| Picks (Per 25mm) | 58 | 62 | 69 | 40 |
| Gauge (mm) | 0.68 | 0.71 | 0.98 | 0.49 |
| Weave | Twill | Twill | Pique | Plain Leno |
| Warp yarn (d'tex) | 78x2 HT | 78x2 HT | 78x2 HT | 110x1 HT |
| Weft yarn (d'tex) | 78x2 HT | 78x2 HT | 78x2 HT | 84x1 MT (POY) |
| *HT = High tenacity* MT = Medium tenacity *POY = Partially orientated yarn | | | | |

## Claims

1. A fabric comprising,
woven, thermoplastic polymer, texturised yarn, having a warp extension at 2kg force 25mm width of 5-60% and a weft extension at 2kg force 25mm width of 40-250%.

2. A fabric as claimed in claim 1, which does not comprise elastane.

3. A fabric as claimed in either claim 1 or claim 2, wherein the thermoplastic polymer is selected from a polyamide, a polyester, and poly (phenylene sulphide) (PPS) or a mixture of two or more of these polymers.

4. A fabric as claimed in any one of the preceding claims, wherein the tenacity of the warp and the weft yarn is in the range 30-80 cN/Tex.

5. A fabric as claimed in any one of the preceding claims, wherein the yarn is woven according to a weaving pattern selected from a twill, a pique, a panama, and/or a hopsack, preferably a twill or pique.

6. A fabric as claimed in any one of the preceding claims wherein the yarn is false twist texturised yarn.

7. A fabric as claimed in any one of the preceding claims wherein the weft extension at 2kg force is 60-150%, preferably 75-150%, more preferably 75-140%.

8. A fabric as claimed in any one of the preceding claims, wherein the fabric has a density in the range 50-600g/m², preferably 150-250 g/m².

9. A fabric as claimed in any one of the preceding claims, wherein the fabric has a thickness in the range 0.2-2.0mm, preferably 0.5-1.2mm.

10. A fabric as claimed in any one of the preceding claims, wherein the air permeability of the fabric is in the range 15 to 100m³/m²/min.

11. A fabric as claimed in any one of the preceding claims, wherein the thermoplastic polymer comprises nylon, poly (ethylene terephthalate) or PPS.

12. A fabric as claimed in any one of the preceding claims, having 50 to 150 ends per 25mm and/or 30-100 picks per 25mm.

13. A ribbed belt comprising a fabric as claimed in any one of the preceding claims on its working surface.

14. A method of producing a fabric, the method comprising providing texturised yarn of a thermoplastic polymer,
weaving the yarn to form a fabric having a warp extension at 2kg force 25mm width of 5-60% and a
width extension at 2kg force 25mm width of 40-250%.

15. A method as claimed in claim 14, wherein texturising the yarn comprises false twist texturising the yarn using a temperature of 190-270°C.
